# EUROPÄISCHE PATENTSCHRIFT

(11) **EP 1 389 492 B1**
(45) Veröffentlichungstag und Bekanntmachung des Hinweises auf die Patenterteilung: **06.02.2008**
(21) Anmeldenummer: 03018237.2
(22) Anmeldetag: 11.08.2003
(51) Int. Cl.: B05B 12/14, F16L 11/12, F16L 9/12, B05B 5/16

(54) **Molchbarer Schlauch für die elektrostatische Beschichtung von Werkstücken**
Piggable pipe for electrostatic coating of pieces
Conduit nettoyable par un râcleur pour le revêtement électrostatique de pièces

(30) Priorität: 28.08.2002 DE 10239516; 06.05.2003 EP 03010195
(43) Veröffentlichungstag der Anmeldung: 18.02.2004
(73) Patentinhaber: Dürr Systems GmbH, 70435 Stuttgart (DE)
(72) Erfinder: Martin, Herbert, 71384 Weinstadt (DE); Stiegler, Martin, 71711 Steinheim 2 (DE)
(74) Vertreter: Heusler, Wolfgang

(56) Entgegenhaltungen:
- EP-A- 0 754 897
- EP-A- 1 134 027
- DE-C1- 10 063 234
- US-A- 6 021 965

## Beschreibung

Die Erfindung betrifft einen molchbaren Schlauch und ein Verfahren zum Herstellen eines solchen Schlauches gemäß dem Oberbegriff der unabhängigen Patentansprüche. Insbesondere handelt es sich um einen Schlauch, durch den in einer Anlage zur serienweisen Beschichtung von Werkstücken unter Hochspannung stehendes elektrisch leitfähiges Beschichtungsmaterial in der Nähe von geerdeten oder auf niedrigem Potential liegenden Teilen der Anlage von einem Molch förderbar ist.

Derartige Schläuche benötigt man bekanntlich in Beschichtunganlagen für die elektrostatische Serienbeschichtung von Werkstücken wie z.B. Fahrzeugkarossen mit Wasserlack oder anderem leitfähigen Beschichtungsmaterial, das auf Hochspannungspotential in der Größenordnung von 100 kV liegen kann, während es von dem Molch durch den Schlauch gefördert wird, wobei der Molch auch als vollkommener Trennkörper zwischen seinem eigenen flüssigen oder gasförmigen Schiebemedium und dem geförderten Beschichtungsmaterial dienen muss (DE 198 30 029, EP 0 904 848, EP 1 172 152, EP 1 108 475 usw.).

Die EP-A 1 134 027 offenbart eine elektrostatische Beschichtungsanlage mit einem Schlauch für unter Hochspannung stehendes Beschichtungsmaterial, das von einem Kolbenelement durch den Schlauch gefördert wird. Das Kolbenelement kann von einem mechanischen Kabelantrieb oder durch Druckluft angetrieben werden. Der Schlauch besteht aus Isoliermaterial und hat eine Innenschicht aus für die Kolbenbewegung optimiertem Kunststoff, eine Verstärkungsschicht und eine flexible Außenschicht. Die Innenschicht kann aus PA, PTFE oder PU bestehen.

Aus der US 6 021 965 ist ein Schlauch für elektrostatisch aufgeladenes Beschichtungsmaterial bekannt, der eine Innenschicht aus elektrisch isolierendem Werkstoff wie Polyethylen, eine zweite isolierende Schicht aus einem elastomeren Werkstoff, eine elektrisch leitfähige dritte Schicht aus Gummimaterial und eine isolierende äußere Schutzschicht aus Polyurethan hat.

Aus der DE 100 63 234 C1 ist eine zur Kontrolle der Betriebsvorgänge transparente Schlauchanordnung bekannt, die aus einem molchbaren Innenschlauch und einem als Knickschutzhülle dienenden Außenschlauch besteht.

Aus der EP-A-0 754 897 ist ein Benzin- oder Gasschlauch bekannt, der eine Innenschicht beispielsweise aus PFA oder FEP und eine Außenschicht aus PVC oder Polyethylen hat.

An molchbare Schläuche werden besondere Anforderungen wie u. a. Flexibilität, Biegewechselfestigkeit, chemische Beständigkeit gegen die von den Molchen geförderten, u.U. aggressiven Medien wie z.B. konventionelle Lacke und als Spül- und/oder Schiebemedium für den Molch dienende Flüssigkeiten sowie geringen Reibwert und hohe Verschleißfestigkeit hinsichtlich des hindurchbewegten Molches und des Schlauches selbst. Ein anderes, insbesondere für die Potenzialtrennung zwischen auf Hochspannungs- bzw. Endpotential liegenden Schlauchbereichen wichtiges Erfordernis ist ein genau bemessener Innendurchmesser mit genau eingehaltenen Form- und Maßtoleranzen und hoher Form- und Maßhaltigkeit auch bei relativ hohen Drücken. Wichtig ist ferner extrem geringe Adhäsion für die hindurchgeleiteten Flüssigkeiten, die zum Aufbau von Isolierstrecken in der durch den Schlauch gebildeten Leitung jeweils restlos von der Innenwand entfernt werden müssen. Die Innenwand des Schlauches soll extrem glatt sein.

Wenn in einer Beschichtungsanlage das Beschichtungsmaterial (z. B. Lack) von einem Molch durch den Schlauch gefördert wird, wobei der Molch seinerseits von einem Schiebemedium (insbesondere Luft oder ein anderes isolierendes Fluid wie z. B. Öl) angetrieben wird, muss der Schlauch eine vollkommene Trennung des Beschichtungsmaterials und des Schiebemediums durch den Molch gewährleisten.

Wegen derartiger Anforderungen müssen dafür speziell geeignete Kunststoffe verwendet werden, die aber den Nachteil haben, dass sie nicht auch optimale elektrische Isolationseigenschaften haben.

Wenn daher in einer Beschichtungsanlage der betrachteten Art molchbare Schläuche für unter Hochspannung stehende Medien in der Nähe von geerdeten Teilen der Anlage verlegt werden sollen oder geerdete Teile zufällig in ihre Nähe kommen können, tritt das Problem der Gefahr von Spannungsdurchschlägen oder zumindest unerwünscht hoher Verlustströme auf. Infolgedessen werden für dieser Gefahr ausgesetzte Leitungen in elektrostatischen Beschichtungsanlagen bisher spezielle hochspannungsfeste Rohre oder Schläuche eingesetzt, die aufgrund ihrer Werkstoffe nicht oder nur schlecht molchbar sind, u.a. auch deshalb, weil es schwierig ist, sie mit genau dem Molch entsprechendem Innendurchmesser herzustellen.

Ein anderes Problem ist die Gefahr von Beschädigungen molchbarer Schläuche durch Einwirkungen von außen. Aus der DE 100 63 234 ist es bekannt, einen molchbaren Schlauch zum Schutz vor allem gegen Knicken und den Molchweg sperrende Beschädigungen koaxial in einem Außenschlauch mit größerem Innendurchmesser anzuordnen, in dem mit Druckluft ein Schutzpolster zwischen den beiden Schläuchen erzeugt wird. Zur Hochspannungsisolation ist dieser Knickschutzschlauch nicht geeignet.

Ziel der Erfindung ist ein für eine elektrostatische Beschichtungsanlage verwendbarer molchbarer Schlauch, der besser als die bisher üblichen Schläuche dazu geeignet ist, neben der Materialförderung mindestens eine zusätzliche Funktion zu erfüllen, insbesondere ein von dem Molch gefördertes, unter Hochspannung stehendes elektrisch leitfähiges Medium gegen die auf niedrigerem oder Erdpotential liegende Außenseite des Schlauches zu isolieren.

Diese Aufgabe wird durch die Merkmale der Patentansprüche gelöst.

Durch die Erfindung können die unterschiedlichen Funktionen des Schlauches, insbesondere also hinsichtlich Molchbarkeit und Isolation durch Wahl der jeweils am besten geeigneten Werkstoffe unabhängig voneinander optimiert werden.

Einerseits kann der Schlauch aufgrund seiner Innenschicht problemlos mit allen für gute Molchbarkeit gewünschten Eigenschaften hergestellt werden. Namentlich gehört hierzu die Möglichkeit genauer dem Molch entsprechender Maß- und Formgebung der Innenwand des Schlauches mit extrem engen Toleranzen, die selbst bei hohem Innendruck erhalten bleibt. Diese Eigenschaft ist nicht nur für vollkommene Trennung des geförderten Materials von dem Schiebemedium des Molches wichtig, sondern auch für das problemlose und verschleißfreie Überfahren von Anschlussstellen der Leitung durch den Molch. Die erforderliche Dichtheit im Schlauch kann auch bei hohem Schiebedruck und langsamer Molchgeschwindigkeit gewährleistet werden.

Trotz dieser Eigenschaften, die auf der Verwendung von kaum für die Hochspannungsisolation geeigneten Werkstoffen beruhen, lässt sich andererseits aufgrund der gesonderten Isolationsschicht ebenso problemlos die für praktisch jeden Anwendungsfall elektrostatischer Beschichtung jeweils erforderliche Durchschlagfestigkeit bei minimalen Verlustströmen erzielen. Die Isolationsschicht kann von der molchbaren Innenschicht getrennt sein, soll aber aus hochspannungstechnischen Gründen möglichst eng und lückenlos an der Innenschicht anliegen. Wenn es die jeweiligen Werkstoffe zulassen, ist auch eine homogene Verbindung der Schichten möglich. Gemäß einem bevorzugten Ausführungsbeispiel kann die Isolationsschicht ihrerseits zwei- oder mehrschichtig ausgebildet sein, um das Isolationsvermögen zu erhöhen.

Die gute Hochspannungsisolationsfähigkeit kann auch bei der Förderung von leitfähigen Flüssigkeiten in nicht gemolchten Leitungen einer Beschichtungsanlage vorteilhaft sein.

Vorzugsweise wird auf den zur Erfüllung der verschiedenen Funktionen des Schlauches auf dem vorzugsweise mindestens zweischichtigen Innenteil eine Schutzschicht aufgebracht, die den Innenteil, insbesondere also die Isolationsschicht, vor Beschädigungen schützt. Im Gegensatz zu dem aus der DE 100 63 234 bekannten Knickschutzschlauch soll diese Schutzschicht bei einem elektrisch isolierenden Molchschlauch möglichst eng und lückenlos an dem Innenteil anliegen. In anderen Fällen kann aber auch ein Schlauch zweckmäßig sein, der zwischen einem mindestens zweischichtigen Innenteil und einer äußeren Schutzhülle Luft enthält.

Der hier beschriebene mehrschichtige Schlauch ist in allen Bereichen der elektrostatischen Beschichtung von Werkstücken verwendbar und eignet sich u.a. auch zum Einsatz in den Energieführungsketten von Robotern und anderen Beschichtungsmaschinen. Beispielsweise kann er in einem Lackierroboter durch dessen verschiedener Achsen (Gelenke) bis zu oder in den Zerstäuber verlegt werden. Aufbau und Werkstoffe des hier beschriebenen Schlauches ermöglichen dessen Verlegung mit kleinen Radien sowie Flexibilität und hohe Biegewechselfestigkeit. Der Schlauch kann zur Förderung sowohl von leitfähigem Beschichtungsmaterial wie Wasserlack als auch von elektrisch nicht leitfähigen und nicht auf Hochspannungspotential gelegten Beschichtungsstoffen mit und ggf. auch ohne Molch verwendet werden.

Darüber hinaus ist ein erfindungsgemäßer molchbarer Schlauch auch in Anlagen der chemischen, pharmazeutischen und Lebensmittelindustrie usw. vorteilhaft verwendbar, in denen es neben der Molchbarkeit statt auf die Hochspannungsisolation auf andere Zusatzfunktionen des Schlauches ankommen kann.

Der erfindungsgemäße Schlauch lässt sich einfach und mit geringem Aufwand herstellen, insbesondere durch Extrudieren, wobei beginnend mit der molchbaren Innenschicht die zweite und weitere Schichten auf die jeweils vorher erzeugte Schicht aufgebracht werden können.

An dem in der Zeichnung dargestellten Ausführungsbeispiel wird die Erfindung näher erläutert. Es zeigen
- Fig. 1: den Querschnitt eines erfindungsgemäßen mehrschichtigen Schlauches;
- Fig. 2: einen Längsschnitt des Schlauches in gegen Fig. 1 verkleinertem Maßstab; und
- Fig. 3: die Anordnung von Schläuchen gemäß Fig. 1 und 2 in einer elektrostatischen Beschichtungsanlage.

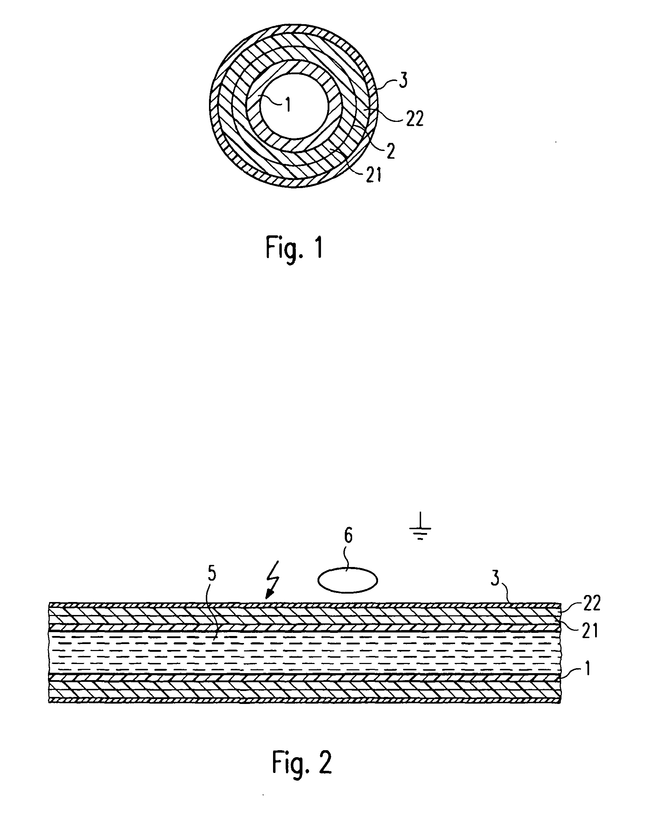

Der in Fig. 1 dargestellte zylindrische Schlauch besteht aus der molchbaren Innenschicht 1, auf der sich lückenlos angrenzend eine als Isolationsschicht dienende hochspannungsfeste Zwischenschicht 2 befindet, die ihrerseits von einer ebenfalls möglichst lückenlos anliegenden schützenden Außenschicht 3 umschlossen ist. Die Zwischenschicht 2 kann ihrerseits mehrschichtig ausgebildet sein und besteht bei dem dargestellten Beispiel aus zwei lückenlos aneinander angrenzenden Teilschichten 21 und 22. Der gesamte Schlauch ist elektrisch nichtleitend.

Für die Innenschicht 1, bei deren Herstellung die erforderlichen geringen Form- und Maßtoleranzen genau eingehalten werden müssen, wird ein Kunststoff gewählt, der möglichst vollkommen die eingangs erläuterten gewünschten Eigenschaften eines gut molchbaren Schlauches gewährleistet. Gut geeignet ist beispielsweise PFA (Perfluor-Alkoxy-Polymere), etwa PFA 420. Ein anderes Beispiel für einen geeigneten Werkstoff ist FEP oder die übergeordnete Stoffgruppe dieser Copolymere.

Die Innenschicht 1 soll möglichst abriebfest im Hinblick auf die Beanspruchung durch die Molche sein und Beständigkeit gegenüber den hindurchfließenden im Lackierbetrieb üblichen Lösemitteln aufweisen. Sie kann auch zwei- oder mehrlagig ausgebildet sein, wobei diese Lagen aus demselben Werkstoff wie z. B. PFA bestehen können. Wenn zwischen diesen (oder anderen) Lagen des Schlauches Luft eingeschlossen ist, kann das die Hochspannungsfestigkeit erhöhen.

Die Zwischenschicht 2 besteht aus einem anderen Werkstoff als die molchbare Innenschicht 1. Für die Hochspannungsisolationsfunktion des Schlauches kann sie z.B. aus PE (Polyethylen), insbesondere LDPE (low density PE) hergestellt sein. Wenn Teilschichten wie 21 und 22 vorgesehen sind, können diese zweckmäßig aus dem selben Kunststoff oder auch aus unterschiedlichen Werkstoffen bestehen. Die z.B. nach der Europa-Norm EN 50176 gemessene elektrische Durchschlagfestigkeit der Zwischenschicht 2 soll in typischen Fällen mindestens 30 kV/mm betragen.

Für die als Schutzmantel dienende Außenschicht 3, die bei dem hier betrachteten Beispiel möglichst wenig zu statischer Aufladung neigen soll, ist u.a. PUR (Polyurethan) geeignet oder auch eventuell ein ähnlicher Werkstoff wie die Innenschicht, also PFA. Die Außenschicht dient u.a. als Abriebschutz und verhindert das sog. Kaltfließen der darunter befindlichen Isolationsschicht. Ferner soll sie Beständigkeit gegenüber den üblichen Lacken und Lösemitteln aufweisen. Ein anderes Beispiel für einen als Schutzschicht geeigneten Werkstoff, der einerseits sowohl abriebfest als auch lösemittelbeständig und andererseits transparent ist, ist PA oder die übergeordnete Stoffgruppe dieser Polyamide.

Bei einem für elektrostatische Beschichtungsanlagen typischen Beispiel eines molchbaren Schlauches der dargestellten Art mit einem Innendurchmesser von etwa 9 mm kann sein Außendurchmesser etwa 17 mm betragen.

Fig. 2 zeigt in einer verkleinerten Längsschnittansicht den oben beschriebenen Schlauch mit einer darin befindlichen elektrisch leitfähigen und unter Hochspannung in der Größenordnung von 100 KV stehenden Flüssigkeit 5, wie z.B. Wasserlack oder dessen Verdünner, die der Schlauch gegen in seiner Nähe außerhalb befindliche Bauteile 6 isolieren soll.

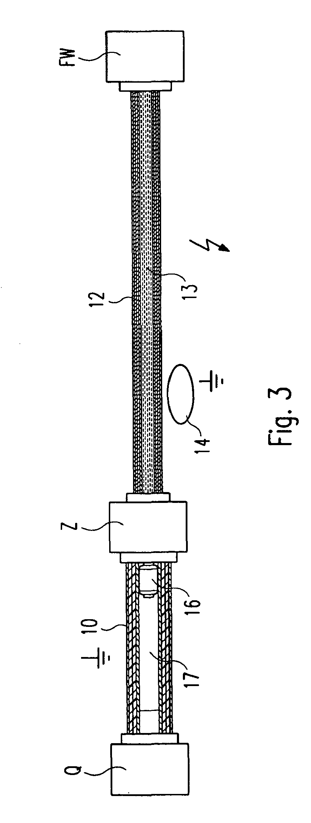

Fig. 3 zeigt als Beispiel für die Verwendung von Schläuchen der hier beschriebenen Art einen Teil einer Anlage für die elektrostatische Beschichtung von Fahrzeugkarossen oder anderen Werkstücken. In dieser Anlage schließt sich an eine zwischen der Molchquellstation Q und der Zielstation Z durch einen ersten mehrschichtigen Schlauch 10 mit dem selben Schichtaufbau wie in Fig. 1 gebildete molchbare Leitungsstrecke eine durch einen zweiten ähnlich mehrschichtigen Schlauch 12 gebildete Leitungsstrecke an, die beispielsweise zu einem Farbwechsler FW führen kann. Der mehrschichtige Schlauch 12 muss bei diesem Beispiel nicht gemolcht werden, enthält aber unter Hochspannung in der Größenordnung von 100 kV stehenden elektrisch leitfähigen Farblack (oder Verdünner) 13, der durch den Schlauch 12 gegen benachbarte geerdete Bauteile 14 isoliert wird. Der Schlauch 10 enthält dagegen einen Molch 16, der die Leitung durch Schaffung einer Isolierstrecke 17 entleert und die zuvor hindurchgeleitete Flüssigkeit restlos von der Innenwand des Schlauches 10 abgestreift hat. Auch der molchbare Schlauch 10 dient also zur elektrischen Isolation der hindurchgeleiteten, z.B. von der Seite des Schlauches 13 her auf Hochspannung gelegten Flüssigkeit gegen die geerdete Umgebung, wobei der Schlauch 10 auch die auf Hochspannungspotential gelegte Zielstation Z von der geerdeten Quellstation Q isoliert.

Der Schlauch 12 kann einen anderen Durchmesser haben als der Schlauch 10, aber aus den selben Werkstoffen hergestellt sein. Der Werkstoff der Innenschicht 1 (Fig. 1) des Schlauches 12 ist bei diesem Beispiel zwar nicht für die Molchbarkeit wichtig, aber für andere der eingangs erläuterten Eigenschaften des Schlauches wie chemische Beständigkeit, geringe Adhäsion, d.h. gute Reinigung durch flüssige oder gasförmige Reinigungsmedien, glatte Innenfläche usw.

Der hier beschriebene Schlauch wird vorzugsweise durch Mehrschichtextrusion hergestellt. Zunächst kann durch Extrusion ein die Innenschicht 1 bildender Schlauch hergestellt werden, dessen Innendurchmesser hierbei mit möglichst geringer Toleranz (vorzugsweise max. ± 0,05 mm) bemessen werden soll, auf den dann die Isolationsschicht extrudiert wird. Auf den aus der Innenschicht 1 und der isolierenden Zwischenschicht 2 bestehenden Schlauch wird dann ebenfalls durch Extrusion die schützende Außenschicht 3 aufgebracht. Die einzelnen Schichten können zeitlich getrennt oder auch gleichzeitig mit Mehrschichtextrudern erzeugt werden. Das Ergebnis ist ein mehrschichtiger Schlauch, dessen einzelne Schichten zwar nicht fest miteinander verbunden sein müssen, aber praktisch lückenlos aneinander anliegen.

Im Rahmen der Erfindung bestehen verschiedene Möglichkeiten der Abwandlung der beschriebenen Ausführungsbeispiele. Insbesondere ist denkbar, dass der Schlauch insgesamt nur aus zwei Schichten aus unterschiedlichen Werkstoffen besteht, wobei die äußere Schicht neben der Isolierfunktion auch die Schutzfunktion der Schutzschicht 3 des beschriebenen Ausführungsbeispiels übernehmen kann.

In jedem Fall ist der Schlauch mit allen Schichten zur Beobachtung der Molche und/oder der Lacksäule während des Beschichtungsbetriebes vorzugsweise transparent.

## Patentansprüche

1. Molchbarer Schlauch, durch den ein fließfähiges Material förderbar ist,
und dessen Innenwand aus einem für die Molchbarkeit des Schlauches und/oder entsprechend der Materialförderung gewählten Werkstoff besteht,
wobei der Schlauch aus mindestens zwei aneinander anliegenden oder angrenzenden Schichten (1, 2, 3) besteht,
und wobei die innerste Schicht (1) die Innenwand des Schlauches bildet und aus PFA oder FEP besteht,
während die zweite Schicht (2) aus einem für Hochspannungsfestigkeit gewählten Isolationswerkstoff besteht und die elektrische Durchschlagsfestigkeit der zweiten Schicht (2) mindestens 30 kV/mm beträgt.

2. Schlauch nach Anspruch 1, **dadurch gekennzeichnet, dass** mindestens eine der Schichten (1, 2) aus einem Werkstoff mit hoher Abriebsfestigkeit besteht.

3. Schlauch nach Anspruch 1 oder 2, **dadurch gekennzeichnet, dass** die zweite Schicht (2) von einer an ihr anliegenden oder angrenzenden Schutzschicht (3) aus einem die zweite Schicht (2) vor Beschädigungen schützenden Werkstoff umgeben ist.

4. Schlauch nach einem der vorangehenden Ansprüche, **dadurch gekennzeichnet, dass** die zweite Schicht (2) aus mindestens zwei Schichten (21, 22) besteht.

5. Schlauch nach einem der vorangehenden Ansprüche, **dadurch gekennzeichnet, dass** die zweite Schicht (2) aus LDPE vorgesehen ist.

6. Schlauch nach einem der vorangehenden Ansprüche, **dadurch gekennzeichnet, dass** als Außenschicht (3) eine Schutzschicht aus PUR oder aus PA vorgesehen ist.

7. Schlauch nach einem der vorangehenden Ansprüche, **dadurch gekennzeichnet, dass** er transparent ist.

8. Schlauch nach einem der vorangehenden Ansprüche, **dadurch gekennzeichnet, dass** die Toleranz seines Innendurchmessers nicht mehr als +/- 0,05 mm beträgt.

9. Verfahren zum Herstellen des molchbaren Schlauches nach einem der vorangehenden Ansprüche, wobei durch den Schlauch ein fließfähiges Material förderbar ist, und dessen Innenwand aus einem für die Molchbarkeit des Schlauches und/oder entsprechend der Materialförderung gewählten Werkstoff besteht, wobei der Schlauch aus mindestens zwei aneinander anliegenden oder angrenzenden Schichten (1, 2, 3) besteht, und wobei die innerste Schicht (1) die Innenwand des Schlauches bildet und aus PFA oder FEP besteht, während die zweite Schicht (2) aus einem für Hochspannungsfestigkeit gewählten Isolationswerkstoff besteht und die elektrische Durchschlagsfestigkeit der zweiten Schicht (2) mindestens 30kV/mm beträgt, wobei zunächst ein die Innenschicht (1) bildender molchbarer Schlauch hergestellt wird, auf den dann die Isolationsschicht (2) durch Extrusion aufgebracht wird.

10. Verfahren nach Anspruch 9, **dadurch gekennzeichnet, dass** auf den aus der Innenschicht (1) und der Isolationsschicht (2) bestehenden Schlauch durch Extrusion eine Schutzschicht (3) aus einem die Isolationsschicht vor Beschädigungen schützenden Werkstoff aufgebracht wird.

11. Verfahren nach Anspruch 9 oder 10, **dadurch gekennzeichnet, dass** der die Innenschicht bildende molchbare Schlauch mit einer Toleranz des Innendurchmessers von max. +/- 0,05 mm hergestellt wird.

12. Verwendung eines Schlauches nach einem der Ansprüche 1 bis 7 zur Förderung einer unter Hochspannung stehenden elektrisch leitfähigen Flüssigkeit in einer Anlage zur elektrostatischen Serienbeschichtung von Werkstücken in der Nähe von geerdeten oder auf niedrigem Potenzial liegenden Teilen der Anlage.

## Claims

1. A piggable hose, through which a flowable material may be supplied and whose inner wall consists of a material selected for the piggability of the hose and/or in accordance with the material supply, wherein the hose consists of at least two engaging or adjoining layers (1, 2, 3), and wherein the innermost layer (1) constitutes the inner wall of the hose and consists of PFA or FEP, whilst the second layer (2) consists of an insulating material selected for high dielectric strength and the electrical breakdown resistance of the second layer (2) is at least 30 kV/mm.

2. A hose as claimed in Claim 1, **characterised in that** at least one of the layers (1, 2) consists of a material with a high abrasion resistance.

3. A hose as claimed in Claim 1 or 2, **characterised in that** the second layer (2) is surrounded by a protective layer (3), which engages or adjoins it, of a material which protects the second layer (2) from damage.

4. A hose as claimed in one of the preceding claims, **characterised in that** the second layer (2) consists of at least two layers (21, 22).

5. A hose as claimed in one of the preceding claims, **characterised in that** the second layer (2) is provided of LDPE.

6. A hose as claimed in one of the preceding claims, **characterised in that** a protective layer of PUR or PA is provided as the outer layer (3).

7. A hose as claimed in one of the preceding claims, **characterised in that** it is transparent.

8. A hose as claimed in one of the preceding claims, **characterised in that** the tolerance of its internal diameter is not more than +/- 0.05 m.

9. A method of manufacturing the piggable hose as claimed in one of the preceding claims, wherein a flowable material may be supplied through the hose and its inner wall consists of a material selected for the piggability of the hose and/or in accordance with the material supply, whereby the hose consists of at least two engaging or adjoining layers (1, 2, 3) and whereby the innermost layer (1) defines the inner wall of the hose and consists of PFA or FEP whilst the second layer (2) consists of an insulating material selected for high dielectric strength and the electrical breakdown strength of the second layer (2) is at least 30 kV/mm, wherein a piggable hose constituting the inner layer (1) is firstly produced, onto which the insulating layer (2) is then applied by extrusion.

10. A method as claimed in Claim 9, **characterised in that** a protective layer (3) of a material which protects the insulating layer from damage is applied by extrusion to the hose consisting of the inner layer (1) and the insulating layer (2).

11. A method as claimed in Claim 9 or 10, **characterised in that** the piggable hose defining the inner layer is produced with a tolerance of the internal diameter of at most +/- 0.05 mm.

12. The use of a hose as claimed in one of Claims 1 to 7 for supplying electrically conductive liquid subjected to high voltage in an installation for the serial electricostatic of workpieces in the vicinity of components of the installation which are earthed or at low potential.

## Revendications

1. Tuyau flexible raclable à travers lequel on peut transporter un produit coulant,
et dont la paroi intérieure est constituée d'un matériau choisi pour sa capacité de raclage du tuyau et/ou en fonction du transport du produit,
dans lequel le tuyau flexible est constitué d'au moins deux couches adjacentes ou contigües (1, 2, 3),
et dans lequel la couche intérieure (1) forme la paroi intérieure du tuyau et est constituée de PFA ou de FEP,
alors que la seconde couche (2) est constituée d'un matériau d'isolation choisi pour sa résistance à la haute tension et la résistance diélectrique de la seconde couche (2) est d'au moins 30 kV/mm.

2. Tuyau flexible selon la revendication 1, **caractérisé en ce qu'**au moins l'une des couches (1, 2) est constituée d'un matériau ayant une résistance à l'abrasion élevée.

3. Tuyau flexible selon la revendication 1 ou 2, **caractérisé en ce que** la seconde couche (2) est entourée par une couche de protection (3) adjacente ou contigüe constituée d'un matériau protégeant la seconde couche (2) contre les dégradations.

4. Tuyau flexible selon l'une quelconque des revendications précédentes, **caractérisé en ce que** la seconde couche (2) est constituée d'au moins deux couches (21, 22).

5. Tuyau flexible selon l'une quelconque des revendications précédentes, **caractérisé en ce que** la seconde couche (2) est prévue en LDPE.

6. Tuyau flexible selon l'une quelconque des revendications précédentes, **caractérisé en ce qu'**il est prévu comme couche extérieure (3) une couche de protection faite en PUR ou en PA.

7. Tuyau flexible selon l'une quelconque des revendications précédentes, **caractérisé en ce qu'**il est transparent.

8. Tuyau flexible selon l'une quelconque des revendications précédentes, **caractérisé en ce que** les tolérances de son diamètre intérieur ne dépassent pas +/- 0,05 mm.

9. Procédé pour la fabrication d'un tuyau flexible raclable selon l'une quelconque des revendications précédentes, un produit coulant pouvant être transporté à travers le tuyau flexible et dont la paroi intérieure est constituée d'un matériau choisi pour sa capacité de raclage du tuyau et/ou en fonction du transport du produit, dans lequel le tuyau est constitué d'au moins deux couches adjacentes ou contigües (1, 2, 3) et dans lequel la couche intérieure (1) forme la paroi intérieure du tuyau et est constituée de PFA ou de FEP alors que la seconde couche (2) est constituée d'un matériau d'isolation choisi pour sa résistance à la haute tension et la résistance diélectrique de la seconde couche (2) est d'au moins 30 kV/mm, dans lequel on fabrique d'abord un tuyau raclable constituant la couche intérieure (1), puis on applique par extrusion une couche d'isolation (2) sur celui-ci.

10. Procédé selon la revendication 9, **caractérisé en ce qu'**une couche de protection (3) constituée d'un matériau protégeant la couche d'isolation contre les dégradations est appliquée par extrusion sur le tuyau flexible constitué de la couche intérieure (1) et de la couche d'isolation (2).

11. Procédé selon la revendication 9 ou 10, **caractérisé en ce que** le tuyau flexible raclable constituant la couche intérieure est fabriqué avec une tolérance de diamètre intérieur maximale de +/- 0,05 mm.

12. Utilisation d'un tuyau flexible selon l'une quelconque des revendications 1 à 7 pour le transport d'un liquide électriquement conducteur sous haute tension dans une installation d'enduction électrostatique en série de pièces à proximité d'éléments de l'installation mis à la terre ou à faible potentiel.
